# EUROPÄISCHE PATENTSCHRIFT

(11) **EP 2 429 838 B1**
(45) Veröffentlichungstag und Bekanntmachung des Hinweises auf die Patenterteilung: **03.04.2013**
(21) Anmeldenummer: 10714590.6
(22) Anmeldetag: 21.04.2010
(51) Int. Cl.: B60G 3/26, B60G 7/00, B62D 17/00

(54) **RADAUFHÄNGUNG FÜR EIN KRAFTFAHRZEUG**
WHEEL SUSPENSION FOR A MOTOR VEHICLE
SUSPENSION DE ROUE POUR UN VÉHICULE À MOTEUR

(30) Priorität: 13.05.2009 DE 102009021093
(43) Veröffentlichungstag der Anmeldung: 21.03.2012
(73) Patentinhaber: Audi AG, 85045 Ingolstadt (DE)
(72) Erfinder: MICHEL, Wilfried, 93339 Riedenburg (DE); MEITINGER, Karl-Heinz, 81667 München (DE); KOSSIRA, Christoph, 85053 Ingolstadt (DE); MÜLLER, Hugo, 86701 Rohrenfels-Ballersdorf (DE); SCHMID, Wolfgang, 85354 Freising (DE)
(74) Vertreter: Asch, Konrad
(86) Internationale Anmeldenummer: PCT/EP2010/002427
(87) Internationale Veröffentlichungsnummer: WO 2010/130329

(56) Entgegenhaltungen:
- WO-A1-98/16418
- WO-A1-2005/047030
- DE-A1- 10 249 159
- DE-A1-102004 049 296

## Beschreibung

Die Erfindung betrifft eine Radaufhängung für ein Kraftfahrzeug nach dem Oberbegriff des Patentanspruches 1.

Bei sogenannten aktiven Lenksystemen, insbesondere für die Hinterachse von Fahrzeugen, kann der Radsturz beziehungsweise die Radspur über ein Stellglied eingestellt werden, so dass durch Steuerung des Stellglieds aktiv auf das Fahrverhalten des Kraftfahrzeugs Einfluss genommen werden kann.

Aus der DE 10 2004 049 296 A1 ist eine Radaufhängung für ein Kraftfahrzeug bekannt. Diese weist eine das Fahrzeugrad drehbar lagernde Nabeneinheit sowie ein achsseitiges Führungsteil auf, zwischen denen Drehteile geschaltet sind. Das der Nabeneinheit zugewandte Drehteil ist ein zylindrischer Verstellring, der mit seinen zylindrischen inneren und äußeren Wirkflächen mit korrespondierenden Wirkflächen des anderen Drehteils und der Nabeneinheit zusammenwirkt. Die Drehachsen der beiden Drehteile sind zueinander schräggestellt. Bei einer Verdrehung der beiden Drehteile kann daher die Radspur oder der Radsturz eingestellt werden.

Die beiden Drehteile können durch Stellantriebe beliebig zueinander verdreht werden. Je nach Kombination der Drehwinkel ergibt sich dabei die gewünschte Vorspur-/Sturzeinstellung. Im Extremfall kann der sich ergebende Beugewinkel in einer Größenordnung von mehreren Winkelgraden liegen. Das heißt, dass das Trägerteil zu dem Führungsteil, das mit weiteren Lenkern am Fahrzeugaufbau festgelegt ist, um einen Winkel von mehreren Winkelgraden schräg stehen kann.

Aus der WO-A-2005/047030 ist eine gattungsgemäße Radaufhängung für ein Kraftfahrzeug bekannt, das eine Einrichtung zum Verändern des Radsturzes aufweist. Bei dieser Einrichtung ist das Fahrzeugrad über ein Schwenklager schwenkbar an einem Radträger gelagert. Eine von dem Schwenklager aufgespannte Schwenkebene ist wenigstens annähernd quer zur Radmittelebene angeordnet.

Die Aufgabe der Erfindung besteht darin, eine Radaufhängung bereitzustellen, bei der auftretende Radialkräfte und Axialkräfte in einfacher Weise betriebssicher abgestützt werden können.

Die Aufgabe ist durch die Merkmale des Patentanspruches 1 gelöst. Bevorzugte Weiterbildungen der Erfindung sind in den Unteransprüchen offenbart.

Gemäß dem Patentanspruch 1 sind die einander zugewandten Wirkflächen zwischen dem Führungsteil, dem Drehteil und/oder dem Trägerteil der Radaufhängung nicht zylindrisch gestaltet, sondern kann eine erste Wirkfläche ein kegel- oder kugelförmiges Hohlprofil radial begrenzen, in das die zweite, zugewandte Wirkfläche zumindest im Wesentlichen formschlüssig einragen kann.

Im Hinblick auf den erfinderischen Gedanken sind unterschiedliche Varianten der beiden einander zugewandten Wirkflächen denkbar: Beispielsweise können die beiden zugewandten Wirkflächen kegelförmig ausgebildet sein, oder kann eine erste der Wirkflächen als Kugelkalotte ausgebildet sein, während die zweite Wirkfläche entsprechend kugelförmig in diese Kugelkalotte einragen kann. Alternativ kann die erste Wirkfläche kegelförmig sein, während die zweite Wirkfläche eine Kugelscheibenoberfläche ist, wodurch eine Kegelpfanne/Kugelscheiben-Lagerung erreicht ist.

Erfindungsgemäß sind die beiden zwischen Führungsteil und Trägerteil in geschalteten Drehteile als ein Stellglied zur Einstellung eines Spur- und/oder Sturzwinkels ausgebildet. Hierzu sind die einander zugewandten Wirkflächen zwischen den beiden Drehteilen derart ausgelegt, dass die Drehachse des einen Drehteils um einen Neigungswinkel gegenüber der Drehachse des anderen Drehteils schräggestellt ist.

Die jeweils einander zugewandten Wirkflächen können in einer Variante unmittelbar oder gegebenenfalls unter Zwischenlage einer reibungsvermindernden Beschichtung in Anlage sein, wodurch eine insgesamt kostengünstige sowie robuste Gleitlagerung zwischen beiden Wirkflächen bereitgestellt ist.

Alternativ dazu können die einander zugewandten Wirkflächen über ein Rollenlager miteinander in Verbindung sein. Im Falle von kegelförmig ausgebildeten Wirkflächen kann dies ein Kegelrollenlager sein.

Erfindungsgemäß ergeben sich zwischen dem vierteiligen Radträger, bestehend aus Trägerteil, den beiden Drehteilen sowie dem Führungsteil drei Lagerstellen. Für eine einwandfreie Aufnahme der Axial- und Radialkräfte ist es von Vorteil, wenn jede der Lagerstellen mit Kegelrollenlagern ausgeführt ist.

Das zweite Drehteil weist gemäß obiger Beschreibung eine dem ernsten Drehteil zugewandte Wirkfläche sowie eine dem Führungsteil zugewandte Wirkfläche auf. Für eine besonders kompakte sowie in Axialrichtung stabile Ausführung können diese beiden Wirkflächen am zweiten Drehteil in zueinander entgegengesetzter Richtung ausgeweitet sein.

Das erste Drehteil gemäß obiger Beschreibung weist demgegenüber eine dem Trägerteil zugewandte Wirkfläche und eine dem zweiten Drehteil zugewandte Wirkfläche auf, die in gleicher Richtung kegel- oder kugelförmig ausgeweitet sein können.

Vor diesem Hintergrund kann das zweite Drehteil in Axialrichtung beidseitig jeweils ein kegel- oder kugelförmiges Hohlprofil aufweisen, in das einerseits das erste Drehteil und andererseits auch das Führungsteil einragen kann. Das Trägerteit kann außerdem mit seiner Wirkfläche radial innenseitig innehalb des ersten Drehteiles bauraumgünstig angeordnet sein.

Das radseitige Trägerteil und das achsseitige Führungsteil können in der Axialrichtung durch ein Fesselungsmittel festgelegt sein. Insbesondere kann das Fesselungsmittel eine Vorspannkraft in der Axialrichtung auf das Führungs- und Trägerteil ausüben. Durch ein solches Festlegen oder Verspannen der Träger- und Führungsteile können die Lagerstellen insbesondere auf Axialdruckkräfte und Radialkräfte beansprucht werden, während Axialzugkräfte durch das Fesselungsmittel selbst aufgenommen werden können.

Montagetechnisch günstig ist es, wenn der vierteilige Radträger, bestehend aus Trägerteil, den Drehteilen sowie dem Führungsteil, in einer Montagerichtung etwa in Steckverbindung miteinander verbunden sind, ohne dass eine hinterschneidende Konstruktion zur axialen Fixierung der Bauteile erforderlich ist. Beim Zusammenbau können daher die Bauteile einfach ineinander gesteckt werden. Aus baulichen Gründen ist es weiter bevorzugt, wenn das Fesselungsmittel das Führungsteil und das Trägerteil miteinander verbindet, wobei das Fesselungsmittel radial außerhalb der Drehteile angeordnet sein kann.

Das Fesselungsmittel kann zugleich als eine Kupplung zwischen dem Trägerteil und dem Führungsteil wirken. Die Kupplung kann wiederum als Drehmomentbrücke ein Drehmoment, etwa ein Bremsmoment, vom Trägerteil auf das Führungsteil und damit zum Fahrzeugaufbau übertragen. Hierzu kann das Fesselungsmittel bevorzugt ein Kardangelenk oder ein Metallbalg sein.

Die Erfindung ist nachfolgend anhand von mehreren Ausführungsbeispielen beschrieben.

Es zeigen:
- **Fig.1**: ein Prinzipbild der Vorrichtung zum Verstellen von Spur- und Sturzwinkel einer Radaufhängung für Kraftfahrzeug mit einem mehrteiligen Radträger;
- **Fig. 2**: die Vorrichtung gemäß Fig. 1 in einer gegenständlichen Ausführung, mit einem ein Rad tragendes Trägerteil, einem an Radführungselementen der Radaufhängung angelenkten Führungsteil und mit zwei verdrehbaren Drehteilen, die über elektrische Stellmotoren verstellbar sind;
- **Fig. 3**: die Vorrichtung gemäß Fig. 2 in vergrößerter Darstellung der Anordnung und Drehlagerung der Drehteile sowie der Träger und Führungsteile;
- **Fig. 4**: in stark vereinfachter Ansicht die Vorrichtung zur Veranschaulichung der Verstellmimik; sowie
- **Fig. 5a bis 5c**: unterschiedliche Varianten der Wirkflächen zwischen den beiden Drehteilen.

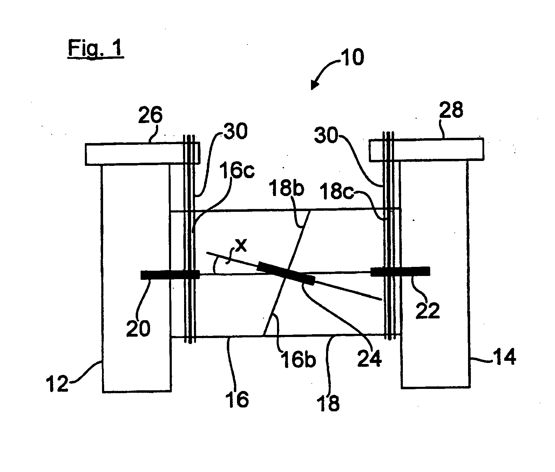

Die Fig. 1 zeigt zur theoretischen Erläuterung der Erfindung als grobes Prinzipbild einen Radträger 10 einer Radaufhängung für Kraftfahrzeuge, der zur Verstellung des Sturzes und/oder der Spur des Fahrzeugrades wie folgt unterteilt ist:
Der Radträger 10 weist ein Trägerteil 12 auf, in dem das Rad und das Bremselement (Bremsschreibe, Bremstrommel) einer Betriebsbremse des Kraftfahrzeuges drehbar gelagert ist. Es sei bemerkt, dass soweit nicht beschrieben die Funktionsteile der Radaufhängung bekannter Bauart sein können.

Ferner weist der Radträger 10 ein Führungsteil 14 auf, das mit der Radaufhängung zusammenwirkt beziehungsweise gegebenenfalls einen Teil der Radaufhängung bildet.

Zwischen dem Trägerteil 12 und dem Führungsteil 14 sind als Stellelementezwei im Wesentlichen rotationssymmetrische Drehteile 16, 18 vorgesehen, die jeweils über Drehachsen 20, 22 verdrehbar mit dem Trägerteil 12 beziehungsweise dem Führungsteil 14 verbunden sind. Die beiden Drehachsen 20, 22 sind in den Figuren koaxial ausgerichtet und verlaufen in der Raddrehachse.

Während die dem Trägerteil 12 und dem Führungsteil 14 unmittelbar benachbarten Anlaufflächen der Drehteile 16, 18 rotationssymmetrisch ausgeführt sind, liegen die Drehteile 16, 18 über Schrägflächen 16b, 18b aneinander derart an, dass das Drehteil 16 um eine in der **Fig. 1** nach oben geneigte Drehachse 24 dreht. Die Drehachse 24 ist daher wie ersichtlich senkrecht zu den Schrägflächen 16b, 18b und in einem definierten Winkel x zu der Drehachse 22 geneigt ausgerichtet.

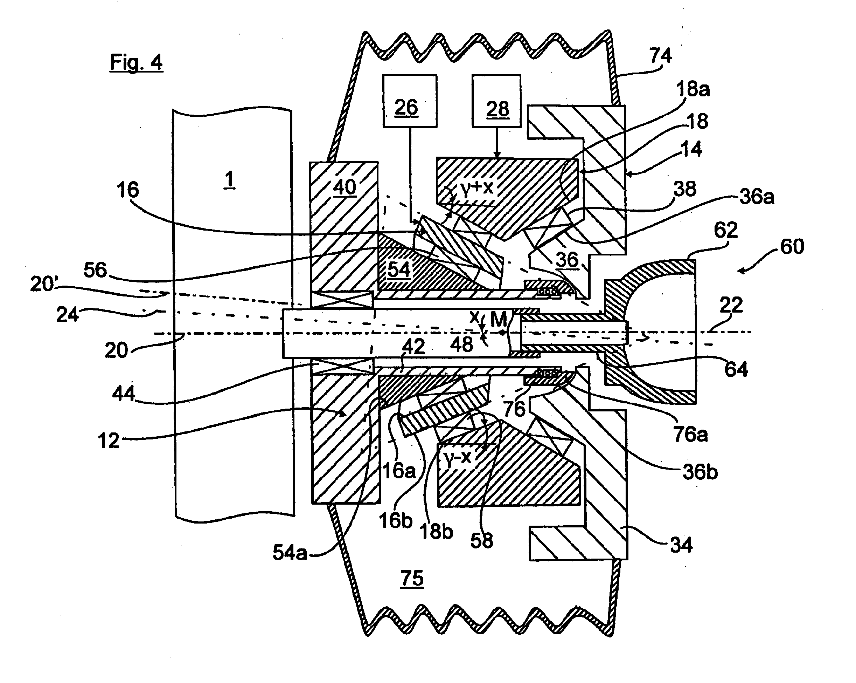

In der **Fig. 1** ist die Mittelachse 20 des Trägerteiles 12 koaxial zur Drehachse 22 des Führungsteiles 14 ausgerichtet, so dass das am Trägerteil 12 gehalterte Fahrzeugrad ohne Sturz- und Spurwinkel eingestellt ist. In der später beschriebenen **Fig. 4** ist zusätzlich auch die Mittenachse 20' angedeutet. Die gezeigte Winkellage der Mittenachse 20' ergibt sich beim Verdrehen der Drehteile 16, 18 um einen Drehwinkel von 180°.

Am Trägerteil 12 und am Führungsteil 14 ist jeweils ein elektrischer Stellmotor 26, 28 vorgesehen, die mit den Drehteilen 16, 18 im Prinzipbild über Zahnriemen 30 trieblich verbunden sind. Mittels der Stellmotoren 26, 28 können die Drehteile 16, 18 gleichsinnig oder gegensinnig in beide Drehrichtungen verdreht werden, wodurch das Trägerteil 12 eine Schwenkbewegung oder eine Taumelbewegung ausführend den Spurwinkel und/oder den Sturzwinkel des Rades entsprechend verändert.

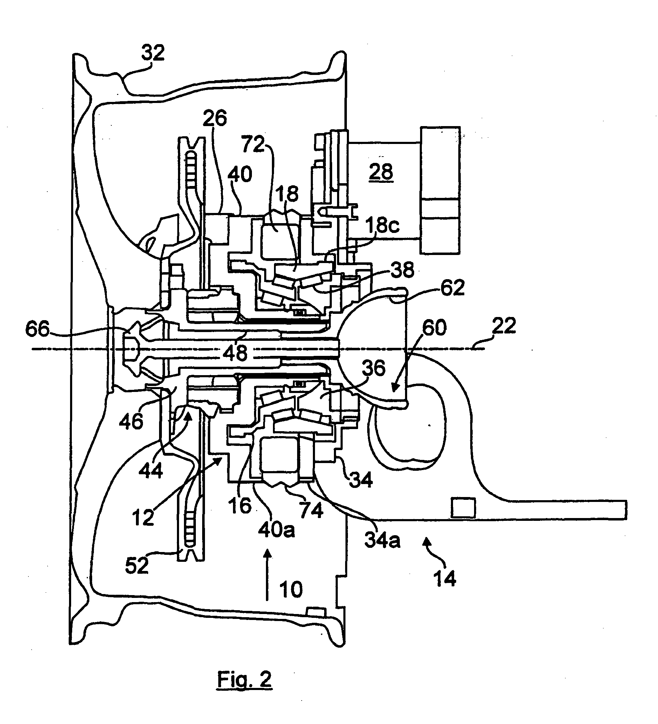

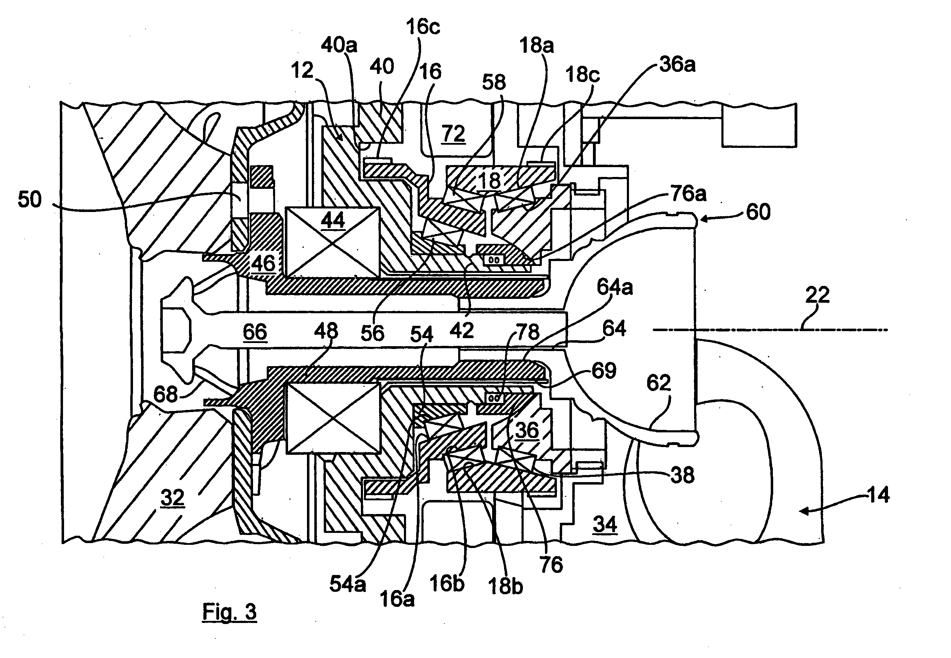

Die **Fig. 2** und **3** zeigen in einem Längsschnitt entlang der Drehachse 22 des Rades der Radaufhängung den Radträger 10 in einer konstruktiven Ausführung.

Der Radträger 10 setzt sich wie vorstehend beschrieben aus dem mit Radführungselementen wie Lenkern, etc. gelenkig verbundenen Führungsteil 14, dem das Rad tragenden Trägerteil 12 und den rotationssymmetrischen Drehteilen 16, 18 zusammen.

Das Führungsteil 14 weist einen Tragflansch 34 auf, der einen radial innenliegenden Lagerring 36 trägt. Gemäß der **Fig. 3** ist die kegelförmige Wirkfläche 36a des Lagerrings 36 der kegelförmigen Wirkfläche 18a des radial außenliegenden Drehteils 18 zugewandt. Der Lagerring 36 bildet über Lagerrollen 38 mit dem radial außenliegenden Drehteil 18 eine erste Kegelrollenlagerung, deren Drehachse mit der Drehachse 22 zusammenfällt.

Das Drehteil 18 ist an seinem Außenumfang mit einem Zahnkranz 18c versehen, der mit einem nicht ersichtlichen Antriebszahnrad des elektrischen Stellmotors 28 trieblich zusammenwirkt. Der Stellmotor 28 ist ebenfalls an dem Tragflansch 34 des Führungsteiles 14 befestigt.

Das Trägerteil 12 weist gemäß der **Fig.3** einen radial ausgerichteten Flanschabschnitt 40 und einen axial verlaufenden Nabenabschnitt 42 auf. Der Nabenabschnitt 42 erstreckt sich radial innerhalb der beiden Drehteile 16, 18 bis auf Höhe des Lagerringes 36 des Tragflansches 34.

Innerhalb des Flanschabschnittes 40 ist ein Radlager 44 als Drehlager für einen Radflansch 46 vorgesehen, der einen axial in den Nabenabschnitt 42 ebenfalls bis etwa zum Lagerring 36 einragenden Nabenabschnitt 48 aufweist.

An dem Radflansch 46 sind mittels Radschrauben 50 (nur teilweise dargestellt) das Rad beziehungsweise die Felge 32 und die Bremsschreibe 52 einer Scheibenbremse befestigt. Der Bremssattel der Scheibenbremse ist in nicht ersichtlicher Weise an dem Flanschabschnitt 40 des Trägerteiles 12 befestigt.

Des Weiteren ist auf dem Nabenabschnitt 42 über einen Lagerinnenring 54 und ein Kegelrollenlager 56 das Drehteil 16 drehbar gelagert, wobei dessen Drehachse ebenfalls mit der Raddrehachse 22 zusammenfällt. Der Lagerinnenring 54 und das radial äußere Drehteil 16 weisen hierzu einander zugewandte kegelförmige Wirkflächen 54a und 16a auf, zwischen den das Kegelrollenlager 56 vorgesehen ist.

Ferner ist das Drehteil 16 über ein drittes Kegelrollenlager 58 mit Lagerrollen in dem Drehteil 18 verdrehbar gelagert. Dabei sind die relevanten kegelförmigen Wirkflächen 16b, 18b derart schräg zur Drehachse 22 ausgeführt, dass durch deren Verdrehung der Sturzwinkel und/oder der Spurwinkel des Rades im Bereich von ca. 5° aus einer Neutralstellung heraus verstellbar sind.

Das Drehteil 16 ragt gemäß der **Fig. 3** in eine Axialnut 40a des Flanschabschnittes 40 ein und trägt einen Außenzahnkranz 16c, der über ein nicht ersichtliches Antriebszahnrad und durch eine Ausnehmung in dem Flanschabschnitt 40 hindurch mit dem elektrischen Stellmotor 26 trieblich verbunden ist. Der Stellmotor 26 ist an dem Flanschabschnitt 40 des Trägerteiles 12 entsprechend befestigt.

Der Radflansch 46 ist über eine nur teilweise dargestellte Gelenkwelle 60 angetrieben, von der der Einfachheit halber nur deren Gelenkglocke 62 und der hülsenförmige Antriebszapfen 64 dargestellt sind. Der Antriebszapfen 64 ist dabei über eine Steckverzahnung 64a in den Nabenabschnitt 48 des Radflansches 46 eingesteckt und mittels einer Spannschraube 66 mit einer Spannhülse 68 gegen den Radflansch 46 gespannt. Zwischen einer Ringschulter der Gelenkglocke 62 und dem Radlager 44 ist eine Distanzhülse 69 abgestützt, die koaxial zu sowie in Radialrichtung zwischen den Nabenabschnitten 42, 48 des Trägerteils 12 und des Radflansches 46 angeordnet ist. Die Spannschraube 66 verspannt somit den Bauteilverbund bestehend aus Spannhülse 68, Radflansch 46, Radlager 44, Distanzhülse 69 und Gelenkwelle 60.

Als Verdrehsicherung zwischen dem Führungsteil 14 und dem Trägerteil 12 ist gemäß der **Fig. 2** und **3** radial außerhalb der Drehteile 16, 18 ein Kardanring 72 vorgesehen, der in Umfangsrichtung formschlüssig über zum Beispiel axial in den Kardanring 72 einragende Mitnehmer an dem Flanschabschnitt 40 des Trägerteiles 12 geführt ist und der lediglich Winkelausschläge, aber keine Relatiwerdrehung zulässt.

Die Vorrichtung zur Verstellung des Radsturzes und/oder der Spur wie vorbeschrieben ist radial außerhalb mittels eines gummielastischen Faltenbalges 74 (vgl. **Fig. 2**) gegen Umwelteinflüsse wie Feuchtigkeit und Schmutz abgedichtet. Der Faltenbalg 74 ist dabei an ringförmigen Vorsprüngen 40a, 34a des Flanschabschnittes 40 des Trägerteils 12 und des Tragflansches 34 des Führungsteils 14 entsprechend befestigt.

Alternativ kann, wie in der **Fig.4** gezeigt ist, der Faltenbalg 74 als dünnwandiger Metallbalg ausgeführt sein, der ausreichend torsionssteif als Verdrehsicherung dient und zusätzlich soweit biegeelastisch ist, dass er unter Abdichtung der radial innenliegenden Funktionsteile die genannten Verstellwinkel dauerhaft aufnimmt. Der beschriebene Kardanring 72 kann dann entfallen.

Eine radial innere Abdichtung der Drehteile 16, 18 und deren Rollenlagerungen, etc. ist zwischen dem Lagerring 36 an der Tragplatte 34 des Führungsteiles 14 und dem Nabenabschnitt 42 des Trägerteiles 12 im Bereich der Gelenkglocke 62 der Gelenkwelle 60 vorgesehen. Dabei ist zu berücksichtigen, dass bei einer Spur- und Sturzverstellung des Rades das Trägerteil 12 eine Taumelbewegung mit einem Gelenkpol in der Mitte des Kardangelenks bei M (**Fig. 4**) ausführt, so dass an dem Ringspalt zwischen der Gelenkglocke 62 und dem Lagerring 36 ein ausreichender Freigang vorzusehen ist.

Zur Sicherstellung einer zuverlässigen Abdichtung ist dazu auf dem Nabenabschnitt 42 ein hülsenförmiger Dichtring 76 axial verschiebbar gelagert, der an seiner Stirnseite einen Kugelabschnitt 76a aufweist, der mit einer kalottenförmigen Ausnehmung 36b im Lagerring 36 zusammenwirkt.

In der **Fig. 4** ist stark vereinfacht die Verstellmimik der erfindungsgemäßen Radaufhängung gezeigt. Demzufolge sind die Stellmotoren 26, 28 innerhalb des Metallbalgs 74 mit den Drehteilen 16, 18 in Wirkverbindung, die mit den Pfeilen angedeutet ist. Wie bereits anhand der **Fig.3** erläutert, weist das Drehteil 18 zwei Wirkflächen 18a und 18b auf. Die Wirkflächen 18a, 18b sind in zueinander entgegengesetzten Richtungen kegelförmig ausgeweitet.

Die für eine Sturz-/Spurverstellung relevanten Wirkflächen 18b und 16b der beiden Drehteile 16, 18 sind dabei um Kegelwinkel (γ+x) beziehungsweise (γ-x) schräg zur Drehachse 22 nach oben geneigt. Die kegelförmigen Wirkflächen 54a, 16a zwischen dem Lagerring 54 und dem Drehteil 16 sind dabei in Axialrichtung ineinander verschachtelt ausgeführt.

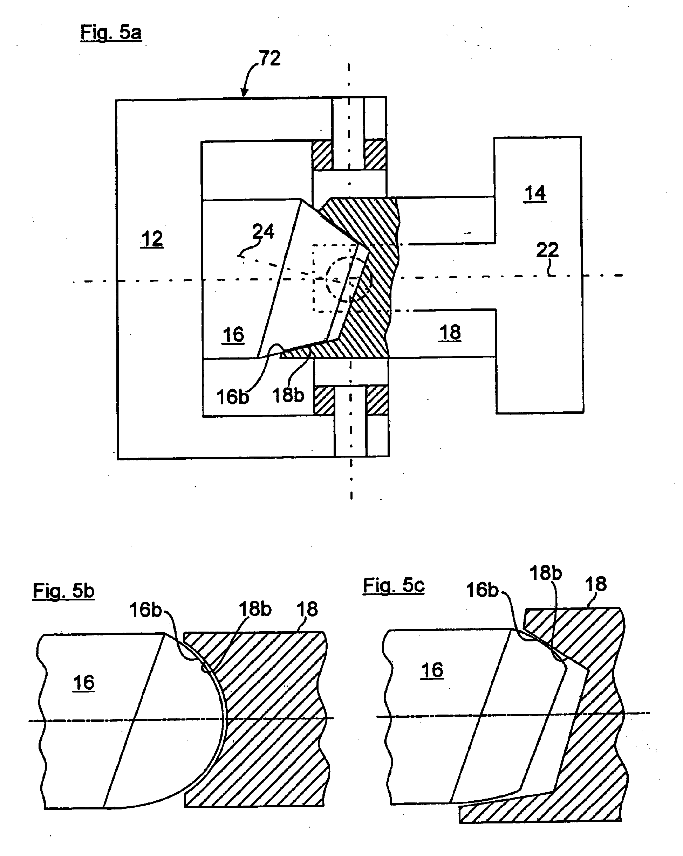

In den **Fig. 5a bis 5c** sind weitere Varianten der Erfindung schematisch gezeigt. So entspricht die in der **Fig. 5a** gezeigte Anordnung vom grundsätzlichen Aufbau und der Funktionsweise den vorangegangenen Vorrichtungen. Im Unterschied zu den vorangegangenen Vorrichtungen ist in der **Fig. 5a** zwischen den Drehteilen 16, 18 eine Gleitlagerung vorgesehen, bei der die kegelförmigen Wirkflächen 16b, 18b unmittelbar in Anlage sind. Die Drehteile 16, 18 sind außerdem über nicht gezeigte Radial- und Axiallagerungen in Drehverbindung mit dem Trägerteil 12 und mit dem Führungsteil 14.

Im Unterschied zur **Fig. 5a** sind die in den **Fig. 5b und 5c** dargestellten Gleitlagerungen zwischen den Drehteilen 16, 18 nicht mittels korrespondierender kegelförmiger Wirkflächen 16b, 18b erreicht. Vielmehr ist in der **Fig. 5b** die Wirkfläche 16b des Drehteils 16 in etwa kugelförmig ausgebildet und mit einer als Kugelkalotte ausgebildeten Wirkfläche 18b des Drehteils 18 in Gleitkontakt. In der **Fig. 5c** ist demgegenüber die Wirkfläche 16b des Drehteils 16 nach Art einer Kugelscheibenoberfläche gestaltet, die in einer als Kegelpfannenfläche ausgebildeten Wirkfläche 18b einragt.

## Patentansprüche

1. Radaufhängung für ein Kraftfahrzeug, mit einem radseitigen, ein Fahrzeugrad (1) drehbar lagerndes Trägerteil (12) und einem achsseitigen Führungsteil (14), zwischen denen zueinander verdrehbare Drehteile (16, 18) angeordnet sind, wobei das Führungsteil (14), die Drehteile (16, 18) und/oder das Trägerteil (12) mit einander zugewandten ersten und zweiten Wirkflächen (18a, 36a; 18b, 16b; 16a, 54a) zusammenwirken, wobei die erste Wirkfläche ein kegel- oder kugelförmiges Hohlprofil radial begrenzt, in das die korrespondierende zweite Wirkfläche zumindest im Wesentlichen formschlüssig einragt, **dadurch gekennzeichnet, dass** die ersten und zweiten Wirkflächen zwischen den Drehteilen (16, 18) derart ausgelegt sind, dass die Drehachse (24) des ersten Drehteils (16) um einen Neigungswinkel (x) gegenüber der Drehachse (22) des zweiten Drehteils (18) schräggestellt ist.

2. Radaufhängung Anspruch 1, **dadurch gekennzeichnet, dass** die ersten und zweiten Wirkflächen über ein Rollenlager (38, 56, 58), im Falle von kegelförmigen Wirkflächen über ein Kegelrollenlager in Verbindung sind.

3. Radaufhängung nach Anspruch 1 oder 2, **dadurch gekennzeichnet, dass** die am zweiten Drehteil (18) ausgebildeten, mit dem Führungsteil (14) und mit dem ersten Drehteil (16) zusammenwirkenden Wirkflächen in zueinander entgegengesetzter Richtung ausgeweitet sind.

4. Radaufhängung nach einem der vorhergehenden Ansprüche, **dadurch gekennzeichnet, dass** das radseitige Trägerteil (12) und das achsseitige Führungsteil (14) durch ein Fesselungsmittel (72, 74), insbesondere mit vorgegebener Vorspannkraft, in Axialrichtung festgelegt sind.

5. Radaufhängung nach Anspruch 4, **dadurch gekennzeichnet, dass** das Fesselungsmittel (72, 74) als Kupplung ausgebildet ist, die das Trägerteil (12) und das Führungsteil (14) verbindet.

6. Radaufhängung nach einem der Ansprüche 4 oder 5, **dadurch gekennzeichnet, dass** das Fesselungsmittel ein Kardangelenk (72) ist, das radial außerhalb der Drehteile (16, 18) angeordnet ist.

7. Radaufhängung nach einem der Ansprüche 4, 5 oder 6, **dadurch gekennzeichnet, dass** das Fesselungsmittel ein Metallbalg (74) ist, der radial außerhalb der Drehteile (16, 18) angeordnet ist.

8. Radaufhängung nach einem der vorhergehenden Ansprüche, **dadurch gekennzeichnet, dass** die beiden zugewandten Wirkflächen (18a, 36a; 18b, 16b; 16a, 54a) kegelförmig ausgebildet sind.

9. Radaufhängung nach einem der Ansprüche 1 bis 7, **dadurch gekennzeichnet, dass** die erste Wirkfläche (18b) als Kugelkalotte ausgebildet ist, und die zweite Wirkfläche (16b) entsprechend kugelförmig ist.

10. Radaufhängung nach einem der Ansprüche 1 bis 7, **dadurch gekennzeichnet, dass** die erste Wirkfläche (18b) kegelförmig ist, und die zweite Wirkfläche (16b) eine Kugelscheibenoberfläche ist.

11. Radaufhängung nach Anspruch 1, **dadurch gekennzeichnet, dass** die ersten und zweiten Wirkflächen unmittelbar, gegebenenfalls unter Zwischenlage einer reibungsvermindernden Beschichtung, in Anlage sind.

12. Radaufhängung nach einem der vorhergehenden Ansprüche, **dadurch gekennzeichnet, dass** die ersten und zweiten Wirkflächen zwischen dem Trägerteil (12) und dem ersten Drehteil (16) und/oder zwischen den beiden Drehteilen (16, 18) und/oder zwischen dem zweiten Drehteil (18) und dem Führungsteil (14) ausgebildet sind.

13. Radaufhängung nach einem der vorhergehenden Ansprüche, **dadurch gekennzeichnet, dass** die am ersten Drehteil (16) ausgebildeten, mit dem Trägerteil (12) und mit dem zweiten Drehteil (18) zusammenwirkenden Wirkflächen in gleicher Richtung ausgeweitet sind.

14. Radaufhängung nach einem der vorhergehenden Ansprüche, **dadurch gekennzeichnet, dass** das zweite Drehteil (18) in Axialrichtung beidseitig jeweils ein kegel- oder kugelförmiges Hohlprofil aufweist, in das einerseits das erste Drehteil (16) und andererseits das Führungsteil (14) einragt.

15. Radaufhängung nach einem der vorhergehenden Ansprüche, **dadurch gekennzeichnet, dass** das radseitige Trägerteil (12), die beiden Drehteile (16, 18) und/oder das achsseitige Führungsteil (14) in einer axialen Montagerichtung hinterschnittfrei miteinander verbunden sind.

## Claims

1. Wheel suspension for a motor vehicle, comprising a wheel-side carrier part (12), rotatably supporting a vehicle wheel (1), and an axle-side guide part (14), between which rotary parts (16, 18) are arranged which are rotatable in relation to one another, the guide part (14), the rotary parts (16, 18) and/or the carrier part (12) interacting with first and second active surfaces (18a, 36a; 18b, 16b; 16a, 54a) which face one another, the first active surface radially delimiting a conical or spherical hollow profile into which the corresponding second active surface projects with an at least substantially positive fit, **characterised in that** the first and second active surfaces between the rotary parts (16, 18) are configured such that the rotational axis (24) of the first rotary part (16) is tilted at an inclination angle (x) in relation to the rotational axis (22) of the second rotary part (18).

2. Wheel suspension according to claim 1, **characterised in that** the first and second active surfaces are connected via a roller bearing (38, 56, 58), via a tapered roller bearing when the active surfaces have a conical shape.

3. Wheel suspension according to either claim 1 or claim 2, **characterised in that** the active surfaces which are formed on the second rotary part (18) and interact with the guide part (14) and with the first rotary part (16) are extended in mutually opposite directions.

4. Wheel suspension according to any of the preceding claims, **characterised in that** the wheel-side carrier part (12) and the axle-side guide part (14) are fixed in an axial direction by a restraining means (72, 74), in particular with a predefinable biasing force.

5. Wheel suspension according to claim 4, **characterised in that** the restraining means (72, 74) is configured as a coupling which connects the carrier part (12) and the guide part (14).

6. Wheel suspension according to either claim 4 or claim 5, **characterised in that** the restraining means is a cardan joint (72) which is arranged radially outside the rotary parts (16, 18).

7. Wheel suspension according to any of claims 4, 5 and 6, **characterised in that** the restraining means is a metal bellows (74) which is arranged radially outside the rotary parts (16, 18).

8. Wheel suspension accordi ng to any of the preceding claims, **characterised in that** the two facing active surfaces (18a, 36a; 18b, 16b; 16a, 54a) have a conical shape.

9. Wheel suspension according to any of claims 1 to 7, **characterised in that** the first active surface (18b) is configured as a spherical cup, and the second active surface (16b) has a complementary spherical shape.

10. Wheel suspension according to any of claims 1 to 7, **characterised in that** the first active surface (18b) has a conical shape and the second active surface (16b) is a spherical washer surface.

11. Wheel suspension according to claim 1, **characterised in that** the first and second active surfaces are in direct contact with one another, optionally with an intermediate layer of a friction-reducing coating.

12. Wheel suspension according to any of the preceding claims, **characterised in that** the first and second active surfaces are formed between the carrier part (12) and the first rotary part (16) and/or between the two rotary parts (16, 18) and/or between the second rotary part (18) and the guide part (14).

13. Wheel suspension according to any of the preceding claims, **characterised in that** the active surfaces which are formed on the first rotary part (16) and interact with the carrier part (12) and with the second rotary part (18) are extended in the same direction.

14. Wheel suspension according to any of the preceding claims, **characterised in that** the second rotary part (18) has a conical or spherical hollow profile on the two sides in an axial direction, into which on one side the first rotary part (16) and on the other side the guide part (14) projects.

15. Wheel suspension according to any of the preceding claims, **characterised in that** the wheel-side carrier part (12), the two rotary parts (16, 18) and/or the axle-side guide part (14) are interconnected in an axial assembly direction without any undercuts.

## Revendications

1. Suspension de roue pour un véhicule automobile, comprenant une partie de support (12) côté roue montant à rotation une roue (1) du véhicule et une partie de guidage (14) côté essieu, entre lesquelles sont agencées des parties rotatives (16, 18) susceptibles de subir une torsion mutuelle, dans laquelle la partie de guidage (14), les parties rotatives (16, 18) et/ou la partie de support (12) coopèrent avec des première et seconde surfaces actives (18a, 36a ; 18b, 16b ; 16a, 54a) tournées l'une vers l'autre, dans laquelle la première surface active délimite radialement un profil creux de forme conique ou sphérique, dans lequel la seconde partie active correspondante s'insère au moins sensiblement par adaptation de formes, **caractérisée en ce que** les première et seconde surfaces actives sont dimensionnées entre les parties rotatives (16, 18) de sorte que l'axe de rotation (24) de la première partie rotative (16) soit disposé incliné d'un angle d'inclinaison (x) par rapport à l'axe de rotation (22) de la seconde partie rotative (18).

2. Suspension de roue selon la revendication 1, **caractérisée en ce que** les première et seconde surfaces actives sont en liaison via un palier à rouleaux (38, 56, 58), dans le cas de surfaces actives coniques via un palier à rouleaux coniques.

3. Suspension de roue selon la revendication 1 ou la revendication 2, **caractérisé en ce que** les surfaces actives formées sur la seconde partie rotative (18) et coopérant avec la partie de guidage (14) et la première partie rotative (16) sont élargies dans un sens qui les sépare l'une de l'autre.

4. Suspension de roue selon l'une quelconque des revendications précédentes, **caractérisée en ce que** la partie de support (12) côté roue et la partie de guidage (14) côté essieu sont fixées dans la direction axiale par un moyen de blocage (72, 74), en particulier avec une force de précontrainte prédéterminée.

5. Suspension de roue selon la revendication 4, **caractérisée en ce que** le moyen de blocage (72, 74) est conformé en couplage qui relie la partie de support (12) et la partie de guidage (14).

6. Suspension de roue selon l'une quelconque des revendications 4 ou 5, **caractérisée en ce que** le moyen de blocage est un joint de cardan (72) qui est aménagé radialement à l'extérieur des parties rotatives (16, 18).

7. Suspension de roue selon l'une quelconque des revendications 4, 5 ou 6, **caractérisée en ce que** le moyen de blocage est un soufflet métallique (74), qui est aménagé radialement à l'extérieur des parties rotatives (16, 18).

8. Suspension de roue selon l'une quelconque des revendications précédentes, **caractérisée en ce que** les deux surfaces actives (18a, 36a ; 18b, 16b ; 16a, 54a) tournées l'une vers l'autre ont une forme conique.

9. Suspension de roue selon l'une quelconque des revendications 1 à 7, **caractérisée en ce que** la première surface active (18b) est conformée en calotte sphérique et la seconde surface active (16b) a une forme sphérique correspondante.

10. Suspension de roue selon l'une quelconque des revendications 1 à 7, **caractérisée en ce que** la première surface active (18b) a une forme conique et la seconde surface active (16b) est une surface de rondelle sphérique.

11. Suspension de roue selon la revendication 1, **caractérisée en ce que** les première et seconde surfaces actives sont directement en appui, éventuellement en intercalant un revêtement réducteur de frottement.

12. Suspension de roue selon l'une quelconque des revendications précédentes, **caractérisée en ce que** la première et la seconde surface active sont formées entre la partie de support (12) et la première partie rotative (16) et/ou entre les deux parties rotatives (16, 18) et/ou entre la seconde partie rotative (18) et la partie de guidage (14).

13. Suspension de roue selon l'une quelconque des revendications précédentes, **caractérisée en ce que** les surfaces actives formées sur la première partie rotative (16) et coopérant avec la partie de support (12) et la seconde partie rotative (18) sont élargies dans le même sens.

14. Suspension de roue selon l'une quelconque des revendications précédentes, **caractérisée en ce que** la seconde partie rotative (18) présente dans la direction axiale, des deux côtés, respectivement, un profil creux conique ou sphérique, dans lequel font saillie, d'une part, la première partie rotative (16) et, d'autre part, la partie de guidage (14).

15. Suspension de roue selon l'une quelconque des revendications précédentes, **caractérisée en ce que** la partie de support (12) côté roue, les deux parties rotatives (16, 18) et/ou la partie de guidage (14) côté essieu sont liées l'une à l'autre dans une direction de montage axiale sans contre-dépouille.
